# EUROPEAN PATENT SPECIFICATION

(11) **EP 1 989 886 B1**
(45) Date of publication and mention of the grant of the patent: **13.04.2016**
(21) Application number: 07705855.0
(22) Date of filing: 12.02.2007
(51) Int. Cl.: H04N 9/31, G09G 3/00, G09G 3/20

(54) **COLOUR IMAGE PROJECTION USING SPATIAL LIGHT MODULATION AND LIGHT SOURCE MODULATION**
PROJEKTION VON FARBBILDERN MITTELS RÄUMLICHER LICHTMODULIERUNG UND LICHTQUELLENMODULIERUNG
PROJECTION D'IMAGES EN COULEURS A L'AIDE DE LA MODULATION DE LUMIERE SPATIALE ET DE LA MODULATION DE SOURCE LUMINEUSE

(30) Priority: 22.02.2006 EP 06110265
(43) Date of publication of application: 12.11.2008
(73) Proprietor: Philips Intellectual Property & Standards GmbH, 20099 Hamburg (DE); Koninklijke Philips N.V., 5656 AE Eindhoven (NL)
(72) Inventor: DEPPE, Carsten, NL-5656 AA Eindhoven (NL); MÖNCH, Holger, NL-5656 AA Eindhoven (NL)
(74) Representative: Verweij, Petronella Daniëlle
(86) International application number: PCT/IB2007/050455
(87) International publication number: WO 2007/096805

(56) References cited:
- EP-A- 1 489 854
- EP-A2- 0 261 896
- WO-A-96/19794
- US-A- 5 903 323
- US-A1- 2004 036 668
- US-A1- 2005 195 223

## Description

The present invention relates to a method of operating a projection system, the projection system comprising several solid state light sources of different colour and at least one spatial light modulator having an array of switchable elements, wherein said array is illuminated by at least one of said light sources for several illumination periods and is addressed such that the light is timely in spatially modulated to project images onto a screen. The invention also refers to a projection device operated according to the method.

Projection systems with spatial light modulators are frequently used as the basis for display systems. Examples for spatial light modulators are liquid crystal devices (LCD), digital micro mirror devices (DMD) and actuated mirror arrays (AMA). One or several light sources illuminate an array of individual switchable elements of these devices. The array is addressed such that the light is modulated into images that are then projected onto a screen.

Some kinds of spatial light modulators function in a digital fashion, where each individual switchable element is either ON or OFF, where in the ON state the elements transfer light to the screen. These types of modulators typically use pulse width modulation (PWM). In pulse width modulation the intensity of each pixel in the image is assigned a digital value, which is obtained by having the element on the array corresponding to the pixel in the ON state for a time that equals said value. It is therefore possible to display grey scale images by controlling the time for which each switchable element of the device is in a state such that light from the element arrives at the displayed image. Due to the integrating response of the human eye an observer will perceive a corresponding greyscale image from the elements.

### Background of the invention

In addition to well known 3-panel LCD systems also 1-panel DLP (Digital Light Processing) systems are realized. In one of the known embodiments of such 1-panel systems three or more colour components of a white light source are directed in a sequential manner to the spatial light modulator by using a rotating colour wheel. For each illumination period in which a colour is transmitted, the spatial light modulator is controlled in accordance with the portion this colour component in the image.

Instead of using a white light source and a colour wheel it is also known to use LED light sources of different colours. These LED light sources are then operated sequentially in order to produce a similar sequential colour illumination as with the use of a colour wheel. Such a technique, which is known for example from EP 1 489 854 A2, has a greater efficiency compared to the solution with the colour wheel since no light is blocked during operation.

A general drawback of such a projection system is the small greyscale resolution which can be achieved. This is due to the limited switching times of the switchable elements of the array in spatial light modulators. DLP systems of the next generation achieve switching times of approximately 10 µs. Based on this value the digital resolution in brightness can be calculated. At an image frequency of 60 Hz the projection of three basic colours can be divided into 550 steps resulting in a greyscale resolution of 9 bit. Due to the nonlinear behaviour of the human eye this resolution is not sufficient, in particular because further losses caused by other effects arise.

EP261896 B1 discloses a colour-sequential display formed by a matrix of surface-stabilised bi-stable ferroelectric liquid crystal elements, each being separately settable by a matrix driver, to provide brightness control of the display, the activation duration of the sets of fluorescent tubes is variable, being dependent on the binary significance of the brightness information for the relevant colour in the input signal.

US5903323 A discloses a system and technique for directing intensity modulated electromagnetic energy. The system includes an intensity modulated source of electromagnetic energy. Individual elements in an array of energy directing elements are activated in sync with the modulation of energy source. In a particular implementation, the source is a laser. The intensity of the laser is reduced during each successive field per frame. The energy directing elements, in this case--light directing elements, are implemented with an array of digital micromirrors. The light source is modulated in intensity in accordance with a fixed modulation scheme. The mirrors are selectively activated relative to the light source modulation scheme. Hence, the invention provides a gray scale output while allowing the time between mirror flips to be constant.

US20050195223 A1 discloses a light modulating apparatus suitable to expand the brightness dynamic range and number of levels of gray of display images to enhance image quality by modulating light from a light source in two stages via a first light modulator device and a second light modulator device, and displaying images according to the resolution of the second light modulator device higher than the resolution of the first light modulator device.

US20040036668 A1 discloses a spatial light modulating-type video display device which has excellent color reproductivity of a video even when a light source is used which emits light having chromaticity coordinates of each of three primary colors (R, G, and B) being different from those designated by specifications of colorimetry. The video display device has a red color light source being driven by the red color light source driving circuit and emitting red color light being, a green color light source being driven by the green color light source driving circuit and emitting green color light, and a blue color light source being driven by the blue color light source driving circuit and emitting blue color light, spatial light modulators each performing spatial modulation on red color light, green color light, and blue color light, an image synthesis optical system to synthesize spatially modulated light, a selecting circuit to select orders of video signals to modulate incident light in each spatial light modulator, and a control circuit to control driving timing and/ordriving current of the light sources in each of the spatial light modulators and timing of selection in the selecting circuit.

WO 1996019794 A1 discloses a system for producing spatially modulated monochrome or color light having gray scale includes an active matrix liquid crystal spatial light modulator having light modulating means including (i) a layer of ferroelectric liquid crystal material which is designed to switch between ON an OFF states and (ii) active matrix means including VLSI circuitry for dividing the layer of liquid crystal material into an array of individual liquid crystal pixels and for causing each of the pixels of liquid crystal material to modulate light individually by switching between the ON and OFF states in a way that depends upon the data which the VLSI circuitry is written. The system also includes illumination means having a light source for directing light from the source into the pixel-divided layer of ferroelectric liquid crystal material in a specific way. And finally, the system includes means for writing the VLSI circuitry with preselected data in accordance with a particular data ordering scheme such that the circuitry, in response to the written data, causes the pixels of liquid crystal material to individually switch between their ON and OFF states and therefore modulate light from the source in a way which, depending upon the data, produces a specific overall pattern of gray scale light.

### Summary of the invention

It is an object of the present invention to provide a method of operating a projection system and a corresponding projection device, which allow the projection of images with an improved greyscale resolution.

This object is achieved with the method and device according to present claims 1 and 5. Advantageous embodiments of the method and device are subject matter of the dependent claims or are described in the subsequent part of the description and examples.

Accordingly there is proposed a method of operating a projection system comprising several solid state light sources for emitting light of different colour and at least one spatial light modulator having an array of switchable elements each for on-off light modulation, wherein said array is illuminated by light of one colour at a time emitted from at least one of said light sources. For projecting one image onto a screen said at least one light source illuminates said array for plural illumination periods with light of a same colour and constant amplitude.

Said array is addressed such that the light is timely and spatially modulated to project said one image onto the screen, said modulation being achieved by switching said switchable elements by means of pulse width modulation during one of said illumination periods. The method is characterized in that one or more light pulses corresponding to further ones of said plural illumination periods are timely arranged within respective periods of switched-on states of the switchable elements of said spatial light modulator, said one or more light pulses having a duration shorter than a shortest possible switched-on time of said switchable elements such that an amount of light arriving at the screen can be reduced by means of pulse width modulation of said one or more the light pulses in order to increase the greyscale resolution of the projection system.

The shortest switched-on state depending on the addressing of the array and limited by the switching times of the switchable elements. The modulation in time is typically performed during all illumination periods. Nevertheless it is also possible to perform this modulation only during illumination periods in which a reduced amount of light contributes to the greyscale resolution for the corresponding projection period.

The method can be used to operate a projection system with several spatial light modulators, for example a 3-panel system in which each of the three spatial light modulators is illuminated by a light source of different colour. All light sources are then controlled to emit light modulated in time during the illumination periods of the arrays of the spatial light modulators. The proposed method can further be used for a projection system with only one spatial light modulator which is illuminated by the several solid state light sources of different colour in a sequential manner (1-panel system). During each period of illuminating the array of switchable elements with one colour the corresponding light source - or light sources in the case of a mixing of colours - is actively modulated in amplitude and/or time.

This additional modulation is possible since modern solid state light sources, like LED's or laser diodes or arrays of such elements, can be switched in very short times compared to the switching times of the switchable elements of the spatial light modulator. In pulsed operation currents larger than the normal current can be used to drive the light sources. A limitation in switching time is mainly set by the limitation in power. LED's, for example, have switching times of far lower than 1 µs. The same applies to the above mentioned laser diodes. Therefore, due to the additional modulation of the solid state light sources the greyscale resolution of the projection system can be increased by appropriately controlling the light emission of the solid state light sources in addition to the modulation of the light by the spatial light modulator.

The several solid state light sources of different colour of the operated projected system are preferably at least three solid state light sources emitting red, green and blue light. Nevertheless it is also possible to use light sources of other basic colours and/or one or several additional white light sources. The number and colours of the light sources depend on the individual application of the projection system. Examples of digital light modulators of the projection system are liquid crystal devices (LCD), in particular ferroelectric LCD devices, and digital micro mirror devices (DMD).

During operation of a 1-panel projection system the spatial light modulator is illuminated by the different colours of the light sources in a sequential manner. To this end the different light sources are operated one after the other for a defined period of time, which is called illumination period in the present application. In order to avoid visible effects the repetition rate of this sequential illumination should be higher than the image frequency of the images to be displayed. Examples of actual systems are sequences > 200 Hz, for example 240 Hz at an image frequency of 60 Hz (4x system).

In many applications the switching elements of the whole array of the spatial light modulator are switched at the same time between consecutive addressing periods. In this case it needs some time in order to write the necessary information into the internal memory of the light modulator (charging time). This time can be on the order of for example 100 µs and is lost for light generation. In the present method, the solid state light sources preferably are switched off during this addressing periods in order to save energy.

The modulation in time during at least one ON state of the switchable elements the light sources is controlled to emit light pulses having a duration shorter than this switched-on state. By varying the pulse widths of these light pulses the amount of light directed to the screen during an ON state can be controlled in order to enhance the greyscale resolution of the projection system.

Due to the use of solid state light sources the time periods of illuminating the spatial light modulator with one colour, i.e. the illumination periods, can also be adjusted according to the required amount of light and greyscale resolution. Furthermore, for each single colour a dynamical adaptation to the maximum value can be achieved by controlling the duration of the illumination periods (optimal power use, contrast enhancement). In a 1-panel system it is also possible to generate illumination periods of white colour dependent on the saturation rate in the image by illuminating the spatial light modulator during these illumination periods with all light sources (for example red, green and blue) at the same time. In the same manner a mixing colour can be produced dependent on the saturation rate in the image by illumination with several of the light sources at the same time. With this method the reduction of so called colour breakup artefacts in the projected images can be achieved.

When modulating the light sources in time to emit light pulses having a duration shorter than the shortest switched-on state of the switchable elements, several of the switchable elements are preferably switched at different times, i.e. not at the same time, between consecutive addressing periods of the array. In this case the switching times must be controlled such that the resulting switched-on states still timely coincide with the light pulses. With this technique the switching of the array can be distributed over the whole period of addressing thereby reducing peaks in the current demand of the chip forming the array.

With the present method the projection system is operated to produce images with higher quality. The reduction of losses in light during dark times allows a higher image brightness. The adjustment of the amount of light results in an improved grey and colour scale and in total produces less annoying artefacts.

The corresponding projection device comprises several solid state light sources of different colour, a control unit and at least one spatial light modulator having an array of switchable elements, wherein said control is designed to operate the projection device, i.e. the light sources and the spatial light modulator(s), according to the proposed methods.

### Brief description of the drawings

The following exemplary embodiments show examples of the proposed method with reference to the accompanying figures without limiting the scope of the invention as defined in the claims. The figures show:
Fig. 1 an example of a projection system which can be operated according to the present invention;
Fig. 2 an example of the sequential illumination of a spatial light modulator with light of different colour;
Fig. 3 an example of amplitude modulation by controlling the light sources;
Fig. 4 an example of time modulation by controlling the light sources according to the method of the present invention; and
Fig. 5 an example of the present method with distributed switching of the switchable elements.

### Description of preferred embodiments

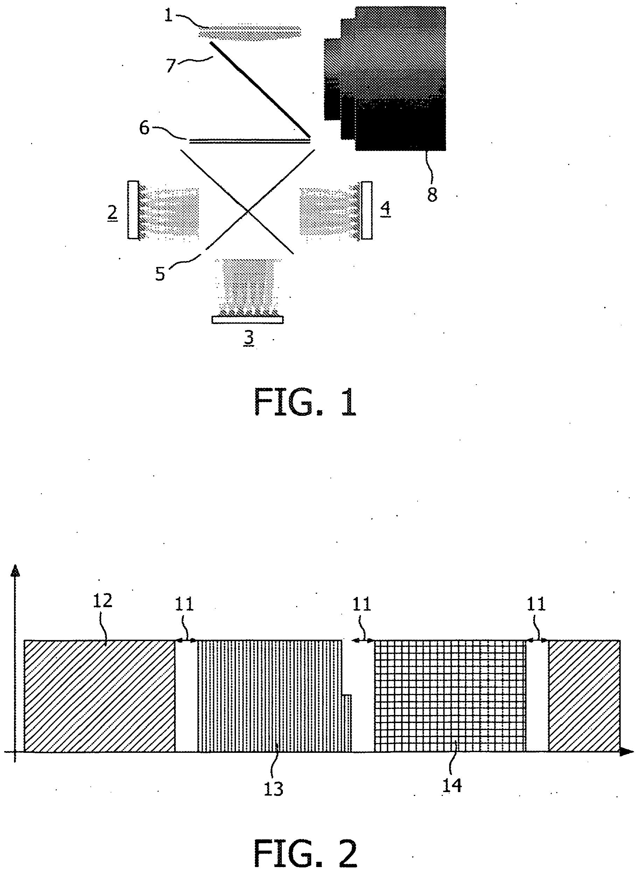

Fig. 1 shows an example of a projection system which can be operated according to the present method. The projection system comprises a control unit (not shown), a digital light modulator 1 and three LED arrays of red (array 2), green (array 3) and blue colour (array 4). The light of the three LED arrays is directed through dichroic colour combiners 5 and a Fresnel field lens 6 to the array of switchable elements of the digital light modulator 1. The optical system further comprises a wire-grid PBS (Polarising Beam Splitter) 7 and a lens system 8 for directing the modulated light reflected from the digital light modulator 1 to a screen.

The light of the solid state light sources, in the present example LED arrays 2, 3, 4, is directed in a sequential manner to the digital light modulator 1. The switchable elements of the digital light modulator 1 are switched in accordance with the greyscale and colour information to be displayed by means of pulse width modulation during each time period of illumination with one of the three colours. The switchable elements are switched so fast that the human eye can not resolve the switching of the light.

Figure 2 schematically shows the sequential illumination of the digital light modulator by the different colours. The light source of each colour is operated for a definite illumination period in which the digital light modulator 1 only directs this light in accordance with the image information to the screen. In the example of figure 2, first the LED array 2 emitting red light 12 is operated for a definite time period (illumination period). After this illumination period the red light source 2 is switched off. In the following, the green LED array 3 is operated emitting green light 13 for a definite illumination period. After switching off the green LED array 3 the blue LED array 4 is operated emitting blue light 14 for a definite illumination period. This sequential illumination continues with the red LED array 2 being operated after the blue LED array 4 and so on. In order to avoid unnecessary energy dissipation a pause is made between the switching off of one light source and the subsequent operation of another light source. This pause corresponds to the addressing time 11 of the digital light modulator 1 which is necessary to load the new control information for the next switching of the switchable elements.

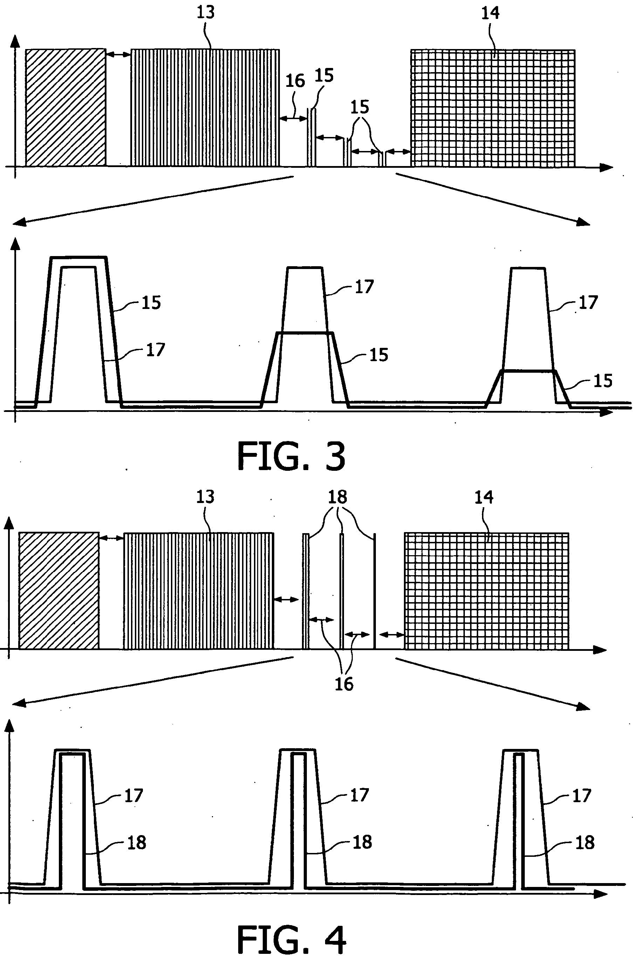

Fig. 2 shows an amplitude modulation of the light sources during the illumination period with the green light 13 as an example. As can be seen from the figure, the intensity of this green light is reduced at the end of the illumination period by one half, thereby adding a new LSB (Least Significant Bit) to the greyscale resolution achievable with the digital light modulator 1. Such an amplitude modulation can be used in order to further increase the greyscale resolution of the projection system as is demonstrated as an example in figure 3.

Figure 3 shows the modulation of the green LED array 3 to emit green light 13 modulated in amplitude. In a first period of time the green light 13 is emitted with a constant amplitude. After this period the light source is switched off during an addressing time 16 of the digital light modulator 1 and then emits a light pulse 15 with a lower amplitude. This is repeated two times with further reduced amplitudes of the green light emission. The three different amplitudes are shown in the lower part of the figure in which also the time period is shown in which the corresponding switchable elements of the digital light modulator are in an ON state, i.e. reflect the light onto the screen. The duration of the light emission of the green light source is such that it exceeds the duration of the switching state 17 of the switchable element. Due to the amplitude modulation a higher greyscale resolution can be achieved corresponding to lower value bits of the image signal.

Figure 4 shows an embodiment of the present method in which the pulse width of the light emitted by the light sources 2-4 is modulated. This embodiment is also only schematically explained with reference to the green light 13. In this case after a longer period of constant light emission three pulses 18 are emitted with different pulse width. These pulse widths are shorter than the shortest switching state 17 of the switchable elements as can be seen in the lower portion of the figure. Therefore, the amount of light arriving at the screen can also be reduced with this technique of pulse width modulation of the emitted light in order to increase the greyscale resolution of the projection system.

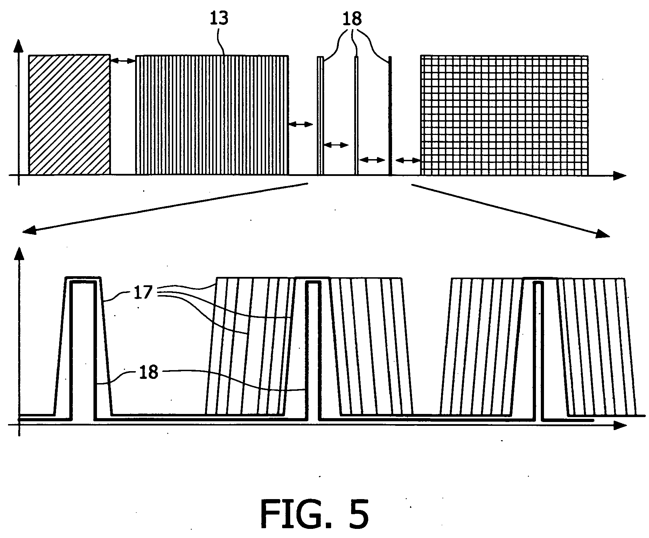

Since the switching times of the light sources are significantly faster than the switching times of the switchable elements, this technique has the further advantage that the switchable elements of the digital light modulator can be switched at different times and must not be switched at the same time resulting in a high power demand. This is schematically indicated in the embodiment of figure 5. This figure shows in the upper part the same modulation as already explained with respect to figure 4. In the lower part a possible distribution of switching states 17 of the switchable elements is indicated. The switching of these elements can be distributed over a large period between consecutive addressing periods as far as it is ensured that the modulated light pulse still timely coincides with the resulting switching state. The amount of light reaching the screen in this case only depends on the pulse width of the light pulse and not on the duration of the switching state of the switchable element.

### LIST OF REFERENCE SIGNS

- 1: Digital light modulator
- 2: Red LED array
- 3: Green LED array
- 4: Blue LED array
- 5: Dichroic colour combiner
- 6: Fresnel field lens
- 7: Wire-grid PBS
- 8: Lens system
- 11: Addressing time
- 12: Red light
- 13: Green light
- 14: Blue light
- 15: Light pulses of different amplitudes
- 16: Addressing time
- 17: Switching state (ON) of switchable element
- 18: Light pulses with different pulse widths

## Claims

1. Method of operating a projection system comprising several solid state light sources (2, 3, 4) for emitting light of different colour (12, 13, 14) and at least one spatial light modulator (1) having an array of switchable elements each for on-off light modulation,
wherein said array is illuminated by light of one colour at a time emitted from at least one of said light sources (2, 3, 4),
wherein for projecting one image onto a screen said at least one light source illuminates said array for plural illumination periods (13, 18) with light of a same colour and constant amplitude,
wherein said array is addressed such that the light is timely and spatially modulated to project said one image onto the screen, said modulation being achieved by switching said switchable elements by means of pulse width modulation during one of said illumination periods (13, 18),
**characterized in that**
one or more light pulses (18) corresponding to further ones of said plural illumination periods (13, 18) are timely arranged within respective periods of switched-on states (17) of the switchable elements of said spatial light modulator, said one or more light pulses (18) having a duration shorter than a shortest possible switched-on time of said switchable elements such that an amount of light arriving at the screen can be reduced by means of pulse width modulation of said one or more the light pulses (18) in order to increase the greyscale resolution of the projection system.

2. Method according to claim 1,
**characterized in that** said light sources (2, 3, 4) are switched off during addressing periods (11, 16) of said array.

3. Method according to claim 1,
**characterized in that** between consecutive addressing periods (11, 16) of said array several of said switchable elements are switched at different times, wherein the switching times are controlled such that the resulting switched-on states (17)), in which the light is directed onto the screen, timely coincide with the emission of the light pulses (18).

4. Method according to claim 1,
**characterized in that** during at least one of said illumination periods more than one light source (2, 3,4) is activated to generate a mixed base colour or white light.

5. Projection device comprising several solid state light sources (2, 3, 4) of different colour (12, 13, 14), at least one spatial light modulator (1) having an array of switchable elements and a control unit, said control unit being designed to operate said projection device according to the method of any of the preceding claims.

## Patentansprüche

1. Verfahren zum Betreiben eines Projektionssystems mit mehreren Festkörperlichtquellen (2, 3, 4) zum Abstrahlen von Licht unterschiedlicher Farben (12, 13, 14) sowie mindestens einem räumlichen Modulator (1) mit einem Array von jeweils zur Ein/Aus-Lichtmodulation schaltbaren Elementen,
wobei das Array durch von mindestens einer der Lichtquellen (2, 3, 4) abgestrahltem Licht von jeweils einer Farbe beleuchtet wird,
wobei zum Projizieren eines Bildes auf einen Bildschirm die mindestens eine Lichtquelle das Array für mehrere Beleuchtungsperioden (13, 18) mit Licht einer gleichen Farbe und konstanten Amplitude beleuchtet,
wobei das Array so adressiert wird, dass das Licht zeitlich und räumlich moduliert wird, um das besagte Bild auf den Bildschirm zu projizieren, wobei die Modulation durch Schalten der schaltbaren Elemente mit Hilfe von Pulsbreitenmodulation während einer der Beleuchtungsperioden (13, 18) erreicht wird,
**dadurch gekennzeichnet, dass**
ein oder mehrere Lichtimpulse (18) entsprechend weiteren der mehreren Beleuchtungsperioden (13, 18) zeitlich innerhalb jeweiliger Perioden von eingeschalteten Zuständen (17) der schaltbaren Elemente des räumlichen Lichtmodulators angeordnet sind, wobei der eine oder mehrere Lichtimpulse (18) eine kürzere Dauer als eine kürzestmögliche Einschaltzeit der schaltbaren Elemente aufweist, so dass eine an dem Bildschirm ankommende Lichtmenge mit Hilfe von Pulsbreitenmodulation des einen oder mehrerer Lichtimpulse (18) reduziert werden kann, um die Grauskalenauflösung des Projektionssystems zu erhöhen.

2. Verfahren nach Anspruch 1,
**dadurch gekennzeichnet, dass** die Lichtquellen (2, 3, 4) während Adressierungsperioden (11, 16) des Arrays ausgeschaltet werden.

3. Verfahren nach Anspruch 1,
**dadurch gekennzeichnet, dass** zwischen aufeinanderfolgenden Adressierungsperioden (11, 16) des Arrays mehrere der schaltbaren Elemente zu verschiedenen Zeiten geschaltet werden, wobei die Schaltzeiten so gesteuert werden, dass die sich ergebenden Einschaltzustände (17), in denen das Licht auf den Bildschirm gelenkt wird, mit der Emission der Lichtimpulse (18) zeitlich koinzidieren.

4. Verfahren nach Anspruch 1,
**dadurch gekennzeichnet, dass** während mindestens einer der Beleuchtungsperioden mehr als eine Lichtquelle (2, 3, 4) aktiviert wird, um eine gemischte Grundfarbe oder weißes Licht zu erzeugen.

5. Projektionseinrichtung mit mehreren Festkörperlichtquellen (2, 3, 4) unterschiedlicher Farbe (12, 13, 14), mindestens einem räumlichen Lichtmodulator (1) mit einem Array von schaltbaren Elementen sowie einer Steuereinheit, wobei die Steuereinheit so eingerichtet ist, dass sie die Projektionseinrichtung gemäß dem Verfahren nach einem der vorangegangenen Ansprüche betreibt.

## Revendications

1. Procédé de fonctionnement d'un système de projection comprenant plusieurs sources de lumière à semi-conducteurs (2, 3, 4) pour émettre de la lumière de couleur différente (12, 13, 14) et au moins un modulateur spatial de lumière (1) ayant un réseau d'éléments commutables chacun pour une modulation de lumière d'activation-désactivation,
dans lequel ledit réseau est éclairé par la lumière d'une couleur à un moment émise depuis au moins une desdites sources de lumière (2, 3, 4),
dans lequel, pour projeter une image sur un écran, ladite au moins une source de lumière éclaire ledit réseau pendant plusieurs périodes d'éclairage (13, 18) avec une lumière d'une même couleur et d'une amplitude constante,
dans lequel ledit réseau est traité de sorte que la lumière soit modulée temporellement et spatialement pour projeter ladite une image sur l'écran, ladite modulation étant réalisée en commutant lesdits éléments commutables au moyen d'une modulation à largeur d'impulsion durant une desdites périodes d'éclairage (13, 18),
**caractérisé en ce que**
une ou plusieurs impulsions de lumière (18) correspondant aux autres desdites multiples périodes d'éclairage (13, 18) sont agencées temporellement dans des périodes respectives d'états activés (17) des éléments commutables dudit modulateur spatial de lumière, ladite ou lesdites impulsions de lumière (18) ayant une durée plus courte qu'un temps activé possible le plus court desdits éléments commutables de sorte qu'une quantité de lumière arrivant sur l'écran puisse être réduite au moyen d'une modulation à largeur d'impulsion de ladite ou desdites impulsions de lumière (18) afin d'augmenter la résolution à échelle des gris du système de projection.

2. Procédé selon la revendication 1,
**caractérisé en ce que** lesdites sources de lumière (2, 3, 4) sont désactivées durant des périodes de traitement (11, 16) dudit réseau.

3. Procédé selon la revendication 1,
**caractérisé en ce que**, entre des périodes de traitement consécutives (11, 16) dudit réseau, plusieurs desdits éléments commutables sont commutés à différents moments, dans lequel les temps de commutation sont commandés de sorte que les états commutés (17) obtenus, dans lesquels la lumière est dirigée sur l'écran, coïncident temporellement avec l'émission des impulsions de lumière (18).

4. Procédé selon la revendication 1,
**caractérisé en ce que**, durant au moins une desdites périodes d'éclairage, plus d'une source de lumière (2, 3, 4) est activée pour générer une lumière blanche ou de couleur de base mélangée.

5. Dispositif de projection comprenant plusieurs sources de lumière à semi-conducteurs (2, 3, 4) de couleur différente (12, 13, 14), au moins un modulateur spatial de lumière (1) ayant un réseau d'éléments commutables et une unité de commande, ladite unité de commande étant conçue pour faire fonctionner ledit dispositif de projection en fonction du procédé selon l'une quelconque des revendications précédentes.
